# EUROPEAN PATENT APPLICATION

(11) **EP 4 791 015 A1**
(43) Date of publication of application: **12.08.2026**
(21) Application number: 24911275.6
(22) Date of filing: 25.12.2024
(51) Int. Cl.: H04N 23/50, H04N 23/56, H04N 23/55, H04N 1/107

(54) **IMAGE ACQUISITION DEVICE AND METHOD**

(30) Priority: 26.12.2023 CN 202311815417
(71) Applicant: Shining 3D Tech Co., Ltd., Hangzhou, Zhejiang 311258 (CN)
(72) Inventor: WANG, Wenbin, Hangzhou, Zhejiang 311258 (CN); ZHAO, Xiaobo, Hangzhou, Zhejiang 311258 (CN); LI, Zhouqiang, Hangzhou, Zhejiang 311258 (CN); WU, Jun, Hangzhou, Zhejiang 311258 (CN); YIN, Andong, Hangzhou, Zhejiang 311258 (CN)
(74) Representative: Dehns Germany Partnerschaft mbB
(86) International application number: PCT/CN2024/142518
(87) International publication number: WO 2025/140353

(57) **Abstract**

The present invention relates to an image acquisition device and method. The device includes: a first projector, configured to project a projection pattern of a first wavelength onto an object to be acquired, causing the object to be acquired to present a projection image based on the first wavelength; a second projector, configured to project light of a second wavelength onto the object to be acquired, causing the object to be acquired to present a marker point image based on the second wavelength; a beam splitting component, arranged between the object to be acquired and a preset camera module, configured to separate light of the first wavelength and light of the second wavelength, thereby separating the projection image and the marker point image, where the preset camera module includes: a first camera module and a second camera module; the first camera module, configured to acquire the projection image; and the second camera module, configured to acquire the marker point image. The present invention solves the technical problem in the related art that the marker point image is contaminated by the projection image in a case where the projection image and the marker point image are acquired simultaneously.

## Description

### Cross-Reference to Related Application

The present invention claims priority to Chinese Patent Application No. 202311815417.9 filed to the China National Intellectual Property Administration on December 26, 2023 and entitled "Image Acquisition Device and Method", the invention of which is hereby incorporated by reference in its entirety.

### Technical Field

The present invention relates to the field of scanning, and specifically, to an image acquisition device and method.

### Background

In handheld scanners, to ensure scanning and stitching accuracy, a stitching method using marker points is often employed. To ensure accuracy by means of synchronization, a camera generally acquires both a projection graph pattern projected by a projector and an image of the marker points simultaneously. However, since the projection graph pattern is cast onto the marker points, the camera directly acquires both the projection graph pattern and the marker points. The marker points are often contaminated by the projection graph pattern, leading to increased extraction errors of the marker points, thereby affecting overall scanning accuracy.

To avoid the contamination of marker points by the projection graph pattern, the following two methods are currently adopted for implementation.
1. Cross-projection and acquisition of the projection graph pattern and the marker points are performed. When the projection graph pattern is projected, the projection graph pattern is acquired linearly. Then, the projection graph pattern is turned off, and the marker point image is acquired.
   However, if this solution is applied in a handheld device, since the handheld device is constantly moving, the time difference between the two acquisitions must be at the microsecond (us) level. Otherwise, the error will be very large.
2. The projection graph pattern and the marker points are acquired simultaneously. For contaminated marker points, accuracy is compensated through subsequent algorithmic compensation.

However, algorithmic compensation is greatly affected by the degree of contamination. Once the edges of the marker points are damaged, it is difficult to ensure that the compensation accuracy meets the requirements of industrial inspection.

Aiming at the problem in the above related art that the marker point image is contaminated by the projection image when the projection image and the marker point image are acquired simultaneously, no effective solution has been proposed so far.

### Summary

Some embodiments of the present invention provide an image acquisition device and method to at least solve the technical problem in the related art that the marker point image is contaminated by the projection image in a case where the projection image and the marker point image are acquired simultaneously.

According to an aspect of some embodiments of the present invention, an image acquisition device is provided, including: a first projector, configured to project a projection pattern of a first wavelength onto an object to be acquired, causing the object to be acquired to present a projection image based on the first wavelength; a second projector, configured to project light of a second wavelength onto the object to be acquired, causing the object to be acquired to present a marker point image based on the second wavelength; a beam splitting component, arranged between the object to be acquired and a preset camera module, configured to separate light of the first wavelength and light of the second wavelength, thereby separating the projection image and the marker point image, where the preset camera module includes: a first camera module and a second camera module; the first camera module, configured to acquire the projection image; and the second camera module, configured to acquire the marker point image.

Optionally, the second projector includes: an illumination component, configured to project light of the second wavelength onto the object to be acquired, causing marker points on a surface of the object to be acquired to reflect the light of the second wavelength and present a marker point pattern based on the second wavelength; or a projection component, configured to project the marker point pattern of the second wavelength onto the object to be acquired, causing the object to be acquired to present the marker point image based on the second wavelength.

Optionally, the illumination component includes: a plurality of illumination modules, where the plurality of illumination modules are arranged around an image acquisition component, where the image acquisition component includes at least: the second camera module.

Optionally, the device further includes: a filtering component, arranged between the object to be acquired and the beam splitting component, configured to filter out light of noise wavelengths from the object to be acquired, obtaining the projection image based on the first wavelength and the marker point image based on the second wavelength.

Optionally, the filtering component includes: a filter plate, arranged between the preset camera module and the object to be acquired, configured to filter out light of wavelengths other than the first wavelength and the second wavelength, obtaining the projection image based on the first wavelength and the marker point image based on the second wavelength.

Optionally, the first camera module includes: a first camera and a second camera, where the first camera and the second camera are arranged on two sides of an optical axis of the first projector, and distances from the first camera and the second camera to the first projector are identical; the second camera module includes: a third camera and a fourth camera, where the third camera and the fourth camera are arranged on two sides of the optical axis of the first projector, and distances from the third camera and the fourth camera to the first projector are identical.

Optionally, the first camera in the first camera module and the third camera in the second camera module are arranged in a first acquisition part of the image acquisition device; the second camera in the first camera module and the fourth camera in the second camera module are arranged in a second acquisition part of the image acquisition device; where the first acquisition part and the second acquisition part are arranged on two sides of the optical axis of the first projector, and distances from the first acquisition part and the second acquisition part to the first projector are identical.

Optionally, the beam splitting component includes: a first beam splitting component, arranged between the object to be acquired and the first acquisition part; and a second beam splitting component, arranged between the object to be acquired and the second acquisition part.

Optionally, the beam splitting component includes: a first beam splitter, arranged between the object to be acquired and the first camera module, configured to transmit the projection image based on the first wavelength and reflect the marker point image based on the second wavelength; and a first reflector, arranged between the object to be acquired and the second camera module, configured to reflect the marker point image reflected by the first beam splitter to the second camera module.

Optionally, the first beam splitter and the first reflector are parallel; an angle between the first beam splitter and an optical axis of the first camera module is a preset angle; and an angle between the first reflector and an optical axis of the second camera module is the preset angle; where the preset angle is 45°.

Optionally, the beam splitting component includes: a second beam splitter, arranged between the object to be acquired and the second camera module, configured to reflect the projection image based on the first wavelength and transmit the marker point image based on the second wavelength; and a second reflector, arranged between the object to be acquired and the first camera module, configured to reflect the projection image reflected by the second beam splitter to the first camera module.

Optionally, the second beam splitter and the second reflector are parallel; an angle between the second beam splitter and an optical axis of the first camera module is the preset angle; and an angle between the second reflector and an optical axis of the second camera module is the preset angle; where the preset angle is 45°.

Optionally, the first beam splitting component and the second beam splitting component may both include the first beam splitter, or both include the second beam splitter, or one of them includes the first beam splitter and the other includes the second beam splitter.

Specifically, the image acquisition device includes a bracket, the first projector mounted on the bracket, the first camera module, and the second camera module. A first acquisition part and a second acquisition part are formed on the bracket on two sides of the optical axis of the first projector. The first camera and the third camera are mounted on the first acquisition part of the bracket, and the second camera and the fourth camera are mounted on the second acquisition part of the bracket. A beam splitting component is provided in front of the first camera and the third camera, and a filter plate is provided in front of the beam splitting component. Similarly, a beam splitting component is provided in front of the second camera and the fourth camera, and a filter plate is provided in front of the beam splitting component. The second projector is an illumination component that projects light without a pattern. The illumination component includes a Light Emitting Diode (LED) lamp group composed of a plurality of LED lamps. The third camera and the fourth camera are respectively provided with LED lamp groups. A plurality of LED rings are provided around the third camera, and a plurality of LED rings are provided around the fourth camera. The pattern acquisition device may perform continuous moving scanning or may perform separated fixed scanning (i.e., scanning at a plurality of scanning points, where the pattern acquisition device remains stationary relative to the object to be acquired at each of the scanning points).

Optionally, the image acquisition device includes a first image acquisition module and a second image acquisition module that are independently arranged. The first image acquisition module includes a bracket, the first projector mounted on the bracket, the first camera module, and the second camera module. A first acquisition part and a second acquisition part are formed on the bracket on two sides of the optical axis of the first projector. The first camera and the third camera are mounted on the first acquisition part of the bracket, and the second camera and the fourth camera are mounted on the second acquisition part of the bracket. A beam splitting component is provided in front of the first camera and the third camera, and a filter plate is provided in front of the beam splitting component. Similarly, a beam splitting component is provided in front of the second camera and the fourth camera, and a filter plate is provided in front of the beam splitting component. The second image acquisition module includes one or more second projectors. The object to be acquired is placed within a projection range of the second projector(s), and continuous moving scanning or separated fixed scanning (i.e., scanning at a plurality of scanning points, where the pattern acquisition device remains stationary relative to the object to be acquired at each of the scanning points) is performed by the first image acquisition module.

According to another aspect of some embodiments of the present invention, a method for image acquisition is further provided, including: projecting, by a first projector, a projection pattern of a first wavelength onto an object to be acquired, causing the object to be acquired to present a projection image based on the first wavelength; projecting, by a second projector, light of a second wavelength onto the object to be acquired, causing the object to be acquired to present a marker point image based on the second wavelength; separating, by a beam splitting component, light of the first wavelength and light of the second wavelength, thereby separating the projection image and the marker point image, where the beam splitting component is arranged between the object to be acquired and a preset camera module, and the preset camera module includes: a first camera module and a second camera module; acquiring, by the first camera module, the projection image; and acquiring, by the second camera module, the marker point image.

In some embodiments of the present invention, a projection pattern of a first wavelength is projected onto an object to be acquired through a first projector, causing the object to be acquired to present a projection image based on the first wavelength; light of a second wavelength is projected onto the object to be acquired through a second projector, causing the object to be acquired to present a marker point image based on the second wavelength; then, light of the first wavelength and light of the second wavelength are separated through a beam splitting component arranged between the object to be acquired and a preset camera module, thereby separating the projection image and the marker point image, subsequently, the projection image is acquired by a first camera module, and the marker point image is acquired by a second camera module in the preset camera module. Thus, in the process of acquiring an image of the object to be acquired, the beam splitting component may separately propagate the projection image based on the first wavelength to the first camera module and propagate the marker point image based on the second wavelength to the second camera module, achieving the purpose of separating the projection image and the marker point image. This achieves the technical effect of avoiding contamination of marker points by the projection image in a case where the projection image and the marker point image are acquired simultaneously, thereby solving the technical problem in the related art that the marker point image is contaminated by the projection image in a case where the projection image and the marker point image are acquired simultaneously.

### Brief Description of the Drawings

The drawings described herein are used for providing a further understanding of the present invention and constitute a part of the present invention. The illustrative embodiments of the present invention and descriptions thereof are used for explaining the present invention and do not constitute an improper limitation of the present invention. In the drawings:
Fig. 1 is a first schematic diagram of an image acquisition device according to some embodiments of the present invention.
Fig. 2 is a second schematic diagram of an image acquisition device according to some embodiments of the present invention.
Fig. 3 is a third schematic diagram of an image acquisition device according to some embodiments of the present invention.
Fig. 4 is a schematic diagram of an image acquisition process according to some embodiments of the present invention.
Fig. 5 is a flowchart of a method for image acquisition according to some embodiments of the present invention.

### Detailed Description of the Embodiments

To enable those skilled in the art to better understand the solutions of the present invention, the technical solutions in some embodiments of the present invention will be described clearly and completely below with reference to the drawings in some embodiments of the present invention. It is apparent that the described embodiments are only some, rather than all, of the embodiments of the present invention. Based on the embodiments in the present invention, all other embodiments obtained by those of ordinary skill in the art without making creative efforts shall fall within the protection scope of the present invention.

It should be noted that terms such as "first" and "second" in the specification and claims of the present invention and the above drawings are used for distinguishing similar objects and are not necessarily used for describing a specific order or sequence. It should be understood that data used in this way may be interchanged in appropriate circumstances so that the embodiments of the present invention described herein may be implemented in an order other than those illustrated or described herein. In addition, the terms "include" and "have" and any variations thereof are intended to cover non-exclusive inclusion. For example, a process, method, system, product, or device containing a series of steps or units is not necessarily limited to those steps or units clearly listed but may include other steps or units not clearly listed or inherent to such processes, methods, products, or devices.

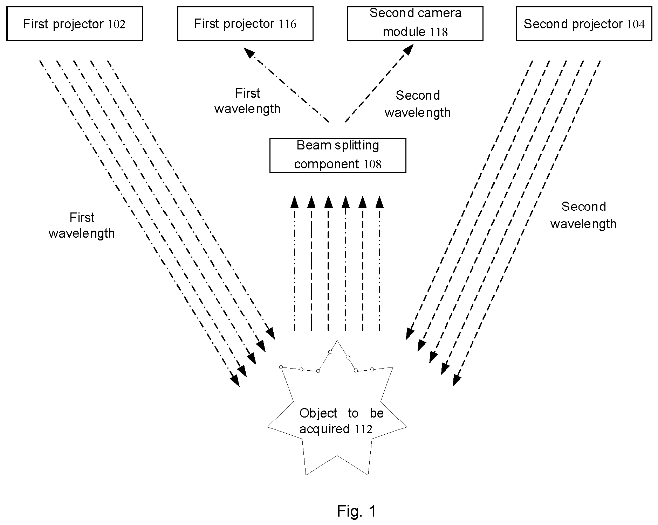

Fig. 1 is a first schematic diagram of an image acquisition device according to some embodiments of the present invention. As shown in Fig. 1, the device may include: a first projector 102 configured to project a projection pattern of a first wavelength onto an object to be acquired 112, causing the object to be acquired 112 to present a projection image based on the first wavelength; a second projector 104 configured to project light of a second wavelength onto the object to be acquired 112, causing the object to be acquired 112 to present a marker point image based on the second wavelength; a beam splitting component 108 arranged between the object to be acquired 112 and a preset camera module, configured to separate light of the first wavelength and light of the second wavelength, thereby separating the projection image and the marker point image, where the preset camera module includes: a first camera module 116 and a second camera module 118; the first camera module 116 configured to acquire the projection image; and the second camera module 118 configured to acquire the marker point image.

In some embodiments of the present invention, a projection pattern of a first wavelength is projected onto an object to be acquired through a first projector, causing the object to be acquired to present a projection image based on the first wavelength; light of a second wavelength is projected onto the object to be acquired through a second projector, causing the object to be acquired to present a marker point image based on the second wavelength; then, light of the first wavelength and light of the second wavelength are separated through a beam splitting component arranged between the object to be acquired and a preset camera module, thereby separating the projection image and the marker point image, subsequently, the projection image is acquired by a first camera module, and the marker point image is acquired by a second camera module in the preset camera module. Thus, in the process of acquiring an image of the object to be acquired, the beam splitting component may separately propagate the projection image based on the first wavelength to the first camera module and propagate the marker point image based on the second wavelength to the second camera module, achieving the purpose of separating the projection image and the marker point image. This achieves the technical effect of avoiding contamination of marker points by the projection image when the projection image and the marker point image are acquired simultaneously, thereby solving the technical problem in the related art that the marker point image is contaminated by the projection image when the projection image and the marker point image are acquired simultaneously.

Optionally, the first projector may be a projector configured to project the projection pattern onto the object to be acquired using light of the first wavelength as a carrier.

Optionally, the projection pattern may be a structured light pattern such as a line stripe pattern or a fringe pattern. After the projection pattern is projected onto the object to be acquired, the projection pattern is modulated by the height of the object to be acquired. The modulated projection pattern (i.e., the projection image) is acquired by the first camera module 116. Subsequently, three-dimensional reconstruction is performed according to the imaging of the projection image in the first camera module 116 to obtain a three-dimensional digital model of the object to be acquired, thereby realizing three-dimensional scanning of the object to be acquired.

For example, the projection pattern may be a planar fringe pattern, and the projection image may be the presentation of the fringe pattern on the surface of the object to be acquired.

It should be noted that the essence of acquiring the object to be acquired is acquiring reflected light from the object to be acquired. By reflecting light of different wavelengths, the object to be acquired may exhibit different colors and/or patterns. Subsequently, by acquiring the reflected light from the object to be acquired through a camera, an image of the surface of the object to be acquired is obtained.

Optionally, the object to be acquired may be an item requiring image acquisition. Three-dimensional scanning of the object to be acquired may be realized by performing three-dimensional reconstruction based on the image of the surface of the object to be acquired.

Optionally, since the surface of the object to be acquired has the projection pattern of the first wavelength projected by the first projector, the image of the object to be acquired includes the projection image presented by the object to be acquired based on the projection pattern of the first wavelength.

Optionally, the beam splitting component may be a beam splitter or a beam splitter group, configured to reflect light of partial wavelengths and transmit light of partial wavelengths in the reflected light from the object to be acquired, thereby realizing separation of light of different wavelengths. Specifically, separation of the projection image based on the first wavelength and the marker point image based on the second wavelength is realized through reflection and transmission through the beam splitter.

Optionally, the first camera module may include at least one camera. Through the first camera module, the projection image presented by the projection pattern of the first wavelength on the surface of the object to be acquired may be acquired.

Optionally, the first camera module may be a camera group configured for three-dimensional reconstruction. According to the projection image acquired by the first camera module, three-dimensional reconstruction of the object to be acquired may be completed.

For example, the projection pattern may be a fringe pattern used in a three-dimensional scanning process. After the fringe pattern is projected onto the surface of the object to be acquired, it undergoes deformation due to height modulation by the object to be acquired, forming the projection image. By acquiring this projection image through the first camera module, three-dimensional reconstruction of the object to be scanned may be completed utilizing the projection image.

Optionally, the first camera module may be a monocular camera configured for three-dimensional reconstruction or a binocular camera configured for three-dimensional reconstruction.

Optionally, the second camera module may include at least one camera. Through the second camera module, reflected light based on the second wavelength from marker points on the surface of the object to be acquired may be acquired to generate the marker point image.

Optionally, the second camera module may be a camera group configured for three-dimensional stitching. Three-dimensional reconstruction is performed based on the marker point image acquired by the second camera module to determine three-dimensional digital marker points. Subsequently, a plurality of partial three-dimensional point clouds reconstructed in segments from the object to be acquired may be stitched based on the three-dimensional digital marker points to obtain a complete three-dimensional point cloud model of the object to be acquired.

It should be noted that in a case where the first camera module cannot acquire a complete image of the object to be acquired through one acquisition, only a partial three-dimensional point cloud of the object to be acquired may be obtained based on the image acquired by the first camera module each time. Then, the plurality of partial three-dimensional point clouds of the object to be acquired, obtained through a plurality of times of acquisition, are stitched into a complete three-dimensional point cloud of the object to be acquired through three-dimensional stitching technology.

Optionally, three-dimensional stitching refers to unifying the plurality of partial three-dimensional point clouds into a single coordinate system to form a complete three-dimensional point cloud.

As an optional embodiment, the second projector includes: an illumination component, configured to project light of the second wavelength onto the object to be acquired, causing marker points on a surface of the object to be acquired to reflect the light of the second wavelength and present a marker point pattern based on the second wavelength; or a projection component, configured to project the marker point pattern of the second wavelength onto the object to be acquired, causing the object to be acquired to present the marker point image based on the second wavelength.

In some embodiments of the present invention, an illumination module is configured to project light of the second wavelength onto the object to be acquired. Since the marker points are small and the reflection is not obvious, disposing a plurality of illumination modules around an image acquisition component ensures that reflected light based on the second wavelength from the marker points may be acquired by the second camera module in the image acquisition component.

Optionally, the illumination component may be a device with a light-emitting function, such as an LED lamp group. The illumination component may generate light of the second wavelength and irradiate the surface of the object to be acquired. Subsequently, the marker points of the object to be acquired may reflect the light of the second wavelength, forming an image of the marker points in the camera.

In some embodiments of the present invention, the second projector may also be a projection component, configured to project the marker point pattern onto the object to be acquired using light of the second wavelength as a carrier. The marker point pattern may be generated on the surface of the object to be acquired. Subsequently, in the process of acquiring an image of the object to be acquired, the second camera module may acquire the marker point image modulated by the object to be acquired from the marker point pattern.

Optionally, the marker point pattern may be a pattern having a plurality of marker points. After the marker point pattern is projected onto the object to be acquired, the marker point pattern is modulated by the height of the object to be acquired. The modulated marker point pattern (i.e., the marker point image) is acquired by the second camera module. Subsequently, three-dimensional reconstruction is performed according to the imaging of the marker point image in the first camera module to determine three-dimensional digital marker points, and the three-dimensional digital marker points may further be utilized for stitching.

Optionally, a plurality of marker points may be preset on the surface of the object to be acquired. Each of the marker points may reflect light of the second wavelength. Therefore, in the image of the object to be acquired, the marker point image presented by the marker points reflecting light of the second wavelength may be included. In this embodiment, the second projector may project light of the second wavelength without a pattern to avoid interfering with the marker points on the surface of the object to be acquired.

As an optional embodiment, the illumination component includes: a plurality of illumination modules, where the plurality of illumination modules are arranged around an image acquisition component, where the image acquisition component includes at least: the second camera module.

In some embodiments of the present invention, in the reflection process of an object, most of the reflected light returns based on the original path of the incident light. Therefore, disposing a plurality of illumination modules around the second camera module allows light of the second wavelength to better supplement light for the second camera module, enabling the second camera module to receive more reflected light from the marker points on the surface of the object to be acquired, thereby obtaining a clearer marker point image.

As an optional embodiment, the device further includes: a filtering component, arranged between the object to be acquired and the beam splitting component, configured to filter out light of noise wavelengths from the object to be acquired, obtaining the projection image based on the first wavelength and the marker point image based on the second wavelength.

In some embodiments of the present invention, noise light reflected from the object to be acquired is filtered out through the filtering component to obtain the projection image reflected from the object to be acquired based on the first wavelength and the marker point image based on the second wavelength, thereby realizing filtering of noise light that does not belong to the first wavelength and the second wavelength.

Optionally, the filtering component may be a filter mirror configured to transmit light of specified wavelengths. Therefore, through the filtering component, reflected light from the object to be acquired may be filtered, retaining the projection image based on the first wavelength reflected by the projection pattern based on the first wavelength from the object to be acquired, and the marker point image based on the second wavelength reflected by the light based on the second wavelength from the object to be acquired.

As an optional embodiment, the filtering component includes: a filter plate, arranged between the preset camera module and the object to be acquired, configured to filter out light of wavelengths other than the first wavelength and the second wavelength, obtaining the projection image based on the first wavelength and the marker point image based on the second wavelength.

In some embodiments of the present invention, the filtering component realizes filtering of reflected light from the object to be acquired through a filter plate, allowing only reflected light based on the first wavelength and the second wavelength to pass through; this realizes filtering of noise light that does not belong to the first wavelength and the second wavelength and ensures that the projection image based on the first wavelength and the marker point image based on the second wavelength may propagate through the filter plate to the first camera module and the second camera module.

Optionally, the filter plate adopts dual channels, allowing both the light of the first wavelength and the light of the second wavelength to pass through simultaneously.

Optionally, the filter plate is perpendicular to the optical axes of the first camera module and the second camera module. Since the filter plate does not change the propagation direction of light of the first wavelength and the second wavelength, arranging the filter plate perpendicular to the optical axes of the cameras ensures that the cameras may complete acquisition of images based on the first wavelength and the second wavelength penetrating through the filter plate.

It should be noted that the optical axes of the first camera module and the second camera module refer to the center lines of camera lenses in an optical system in the direction of light propagation. They are imaginary straight lines starting from the optical center of the camera lens, passing through the center point of the lens, perpendicular to the image plane, and extending to infinity. The camera optical axis plays an important role in photography, determining performance in aspects such as camera focusing, field of view, and perspective effects.

It should be noted that in a case where the image acquisition device uses binocular cameras, both the first camera module and the second camera module have two cameras.

As an optional embodiment, the first camera module includes: a first camera and a second camera, where the first camera and the second camera are arranged on two sides of an optical axis of the first projector, and distances from the first camera and the second camera to the first projector are identical; the second camera module includes: a third camera and a fourth camera, where the third camera and the fourth camera are arranged on two sides of the optical axis of the first projector, and distances from the third camera and the fourth camera to the first projector are identical.

In some embodiments of the present invention, disposing the first camera and the second camera on two sides of the optical axis of the projector and ensuring that distances from the first camera and the second camera to the projector are identical allows the first camera and the second camera to jointly constitute binocular stereo vision of the first camera module; and disposing the third camera and the fourth camera on two sides of the optical axis of the projector and ensuring that distances from the third camera and the fourth camera to the projector are identical allows the third camera and the fourth camera to jointly constitute binocular stereo vision of the second camera module.

It should be noted that the optical axis of the first projector is the propagation direction of light projecting the projection pattern through a projection lens, such as a line connecting the center of the projection lens and the center of the projection pattern.

Optionally, the first projector may be arranged on a perpendicular line of a midpoint of a line segment on which the first camera and the second camera lie, such as being arranged at the midpoint between the first camera and the second camera.

Optionally, the first projector may be arranged on a perpendicular line of a midpoint of a line segment on which the third camera and the fourth camera lie, such as being arranged at the midpoint between the third camera and the fourth camera.

Optionally, the perpendicular line of the midpoint of the line segment on which the first camera and the second camera lie coincides with the perpendicular line of the midpoint of the line segment on which the third camera and the fourth camera lie.

As an optional embodiment, the first camera in the first camera module and the third camera in the second camera module are arranged in a first acquisition part of the image acquisition device; the second camera in the first camera module and the fourth camera in the second camera module are arranged in a second acquisition part of the image acquisition device; where the first acquisition part and the second acquisition part are arranged on two sides of the optical axis of the first projector, and distances from the first acquisition part and the second acquisition part to the first projector are identical.

As an optional embodiment, the beam splitting component includes: a first beam splitting component, arranged between the object to be acquired and the first acquisition part; and a second beam splitting component, arranged between the object to be acquired and the second acquisition part.

In some embodiments of the present invention, a corresponding beam splitting component may be arranged for each of the first acquisition parts, thereby allowing two the beam splitting components to separately separate the projection image and the marker point image for each of the cameras in the binocular vision system.

For example, a binocular vision system configured for three-dimensional reconstruction includes the first camera and the second camera in the first camera module, and a binocular vision system configured for three-dimensional stitching includes the third camera and the fourth camera in the second camera module. The first acquisition part includes the first camera and the third camera, and since the first camera requires the projection image based on the first wavelength and the third camera requires the marker point image based on the second wavelength, image separation may be performed through the first beam splitting component to propagate the projection image to the first camera and propagate the marker point image to the third camera; similarly, the second acquisition part includes the second camera and the fourth camera, and image separation is performed through the second beam splitting component to propagate the projection image to the second camera and propagate the marker point image to the fourth camera.

As an optional embodiment, the beam splitting component includes: a first beam splitter, arranged between the object to be acquired and the first camera module, configured to transmit the projection image based on the first wavelength and reflect the marker point image based on the second wavelength; a first reflector, arranged between the object to be acquired and the second camera module, configured to reflect the marker point image reflected by the first beam splitter to the second camera module.

In some embodiments of the present invention, the first beam splitter allows reflected light of the first wavelength to pass through and reflects reflected light of the second wavelength. Therefore, the projection image based on the first wavelength may directly transmit through the first beam splitter and propagate to the first camera module. The marker point image based on the second wavelength may propagate to the first reflector under reflection by the first beam splitter. The first reflector then reflects the marker point image of the second wavelength, changing the optical path carrying the marker point image, and propagates it to the second camera module, thereby realizing separation of the projection image based on the first wavelength and the marker point image based on the second wavelength.

As an optional embodiment, the first beam splitter and the first reflector are parallel; an angle between the first beam splitter and an optical axis of the first camera module is a preset angle; and an angle between the first reflector and an optical axis of the second camera module is the preset angle; where the preset angle is 45°.

In some embodiments of the present invention, after reflected light from the object to be acquired is filtered by the filtering component, reflected light based on the first wavelength and reflected light based on the second wavelength may be obtained. The propagation direction of the reflected light is parallel to the optical axis directions of the first camera module and the second camera module. Consequently, by setting the angle between the first beam splitter and the optical axis of the first camera module to 45°, the projection image based on the first wavelength may transmit through the first beam splitter and propagate along the optical axis of the first camera module to the first camera module. The marker point image based on the second wavelength may undergo right-angle reflection by the first beam splitter and propagate to the first reflector. Since the angle between the first reflector and the optical axis of the second camera module is also set to 45°, and the first beam splitter and the first reflector are parallel, the first reflector may also produce right-angle reflection for the marker point image based on the second wavelength, propagating the marker point image based on the second wavelength along the optical axis of the second camera module to the second camera module.

As an optional embodiment, the beam splitting component includes: a second beam splitter, arranged between the object to be acquired and the second camera module, configured to reflect the projection image based on the first wavelength and transmit the marker point image based on the second wavelength; and a second reflector, arranged between the object to be acquired and the first camera module, configured to reflect the projection image reflected by the second beam splitter to the first camera module.

In some embodiments of the present invention, the second beam splitter allows reflected light of the second wavelength to pass through and reflects reflected light of the first wavelength. Therefore, the marker point image based on the second wavelength may directly transmit through the second beam splitter and propagate to the second camera module. The projection image based on the first wavelength may propagate to the second reflector under reflection by the second beam splitter. The second reflector then reflects the projection image of the first wavelength, changing the optical path carrying the projection image, and propagates it to the first camera module, thereby realizing separation of the projection image based on the first wavelength and the marker point image based on the second wavelength.

As an optional embodiment, the second beam splitter and the second reflector are parallel; an angle between the second beam splitter and an optical axis of the first camera module is the preset angle; and an angle between the second reflector and an optical axis of the second camera module is the preset angle; where the preset angle is 45°.

In some embodiments of the present invention, after reflected light from the object to be acquired is filtered by the filtering component, reflected light based on the first wavelength and reflected light based on the second wavelength may be obtained. The propagation direction of the reflected light is parallel to the optical axis directions of the first camera module and the second camera module. Consequently, by setting the angle between the second beam splitter and the optical axis of the second camera module to 45°, the marker point image based on the second wavelength may transmit through the second beam splitter and propagate along the optical axis of the second camera module to the second camera module. The projection image based on the first wavelength may undergo right-angle reflection by the second beam splitter and propagate to the second reflector. Since the angle between the second reflector and the optical axis of the first camera module is also set to 45°, and the second beam splitter and the second reflector are parallel, the second reflector may also produce right-angle reflection for the projection image based on the first wavelength, propagating the marker point image based on the first wavelength along the optical axis of the first camera module to the first camera module.

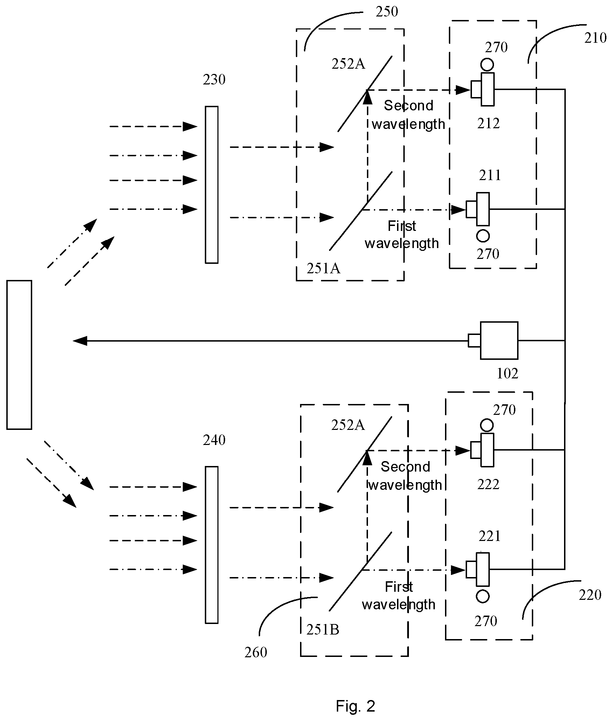

Fig. 2 is a second schematic diagram of an image acquisition device according to some embodiments of the present invention. As shown in Fig. 2, the image acquisition device includes: a first acquisition part 210 and a second acquisition part 220, where the first acquisition part 210 includes: a first camera 211 in the first camera module 116 and a third camera 212 in the second camera module 118; and the second acquisition part 220 includes: a second camera 221 in the first camera module and a fourth camera 222 in the second camera module.

Optionally, as shown in Fig. 2, the first projector 102 is arranged in the middle between the first acquisition part 210 and the second acquisition part 220.

As an optional embodiment, as shown in Fig. 2, the image acquisition device includes: a filtering component, where the filtering component includes: a first filter plate 230 arranged between the first acquisition part 210 and the object to be acquired; and a second filter plate 240 arranged between the second acquisition part 220 and the object to be acquired.

Optionally, the filtering component may employ a single filter plate arranged between the object to be acquired and the first acquisition part and the second acquisition part.

It should be noted that the filter plate may allow light of the first wavelength and the second wavelength to pass through. Therefore, the projection pattern of the first wavelength projected by the first projector and the light of the second wavelength projected by the illumination component may also penetrate through the filter plate and be projected onto the surface of the object to be acquired.

As an optional embodiment, as shown in Fig. 2, the beam splitting component includes: a first beam splitting component 250 arranged between the object to be acquired and the first acquisition part 210, configured to propagate the projection image to the first camera 211 and propagate the marker point image to the third camera 212; and a second beam splitting component 260 arranged between the object to be acquired and the second acquisition part 220, configured to propagate the projection image to the second camera 221 and propagate the marker point image to the fourth camera 222.

As an optional embodiment, as shown in Fig. 2, the first beam splitting component 250 includes: a first beam splitter 251A, allowing reflected light of the first wavelength to pass through, configured to transmit the projection image based on the first wavelength to the first camera 211, and reflecting reflected light of the second wavelength, configured to reflect the marker point image of the second wavelength to a first reflector 252A; and the first reflector 252A, reflecting reflected light of the second wavelength, configured to reflect the marker point image reflected by the first beam splitter 251A to the third camera 212.

As an optional embodiment, as shown in Fig. 2, the first beam splitter 251A and the first reflector 252A are parallel; an angle between the first beam splitter 251A and an optical axis of the first camera 211 is a preset angle; and an angle between a second beam splitter 252A and an optical axis of the third camera 212 is the preset angle; where the preset angle is 45°.

As an optional embodiment, as shown in Fig. 2, the second beam splitting component 260 includes: a second beam splitter 251B, allowing reflected light of the first wavelength to pass through, configured to transmit the projection image based on the first wavelength to the second camera 221, and reflecting reflected light of the second wavelength, configured to reflect the marker point image of the second wavelength to a second reflector 252B; and the second reflector 252B, reflecting reflected light of the second wavelength, configured to reflect the marker point image reflected by the second beam splitter 251B to the fourth camera 222.

As an optional embodiment, as shown in Fig. 2, the second beam splitter 251B and the second reflector 252B are parallel; an angle between the second beam splitter 251B and an optical axis of the second camera 221 is a preset angle; and an angle between the second reflector 252B and an optical axis of the fourth camera 222 is the preset angle; where the preset angle is 45°.

Optionally, as shown in Fig. 2, in the illumination component, a plurality of illumination modules 270 are respectively arranged around the first acquisition part 210 and the second acquisition part 220.

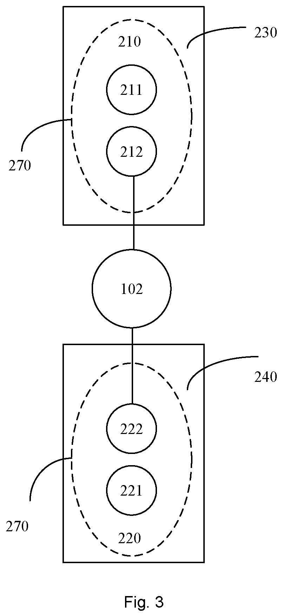

Fig. 3 is a third schematic diagram of an image acquisition device according to some embodiments of the present invention. As shown in Fig. 3, the first projector 102 is arranged in the middle between the first acquisition part 210 and the second acquisition part 220; the first acquisition part 210 includes the first camera 211 in the first camera module and the third camera 212 in the second camera module; the second acquisition part 220 includes the second camera 221 in the first camera module and the fourth camera 222 in the second camera module; the first filter plate 230 is arranged in front of the first acquisition part 210; the second filter plate 240 is arranged in front of the second acquisition part 220; and the plurality of illumination modules 270 are LEDs uniformly arranged around the cameras in the first acquisition part 210 and the second acquisition part 220 respectively.

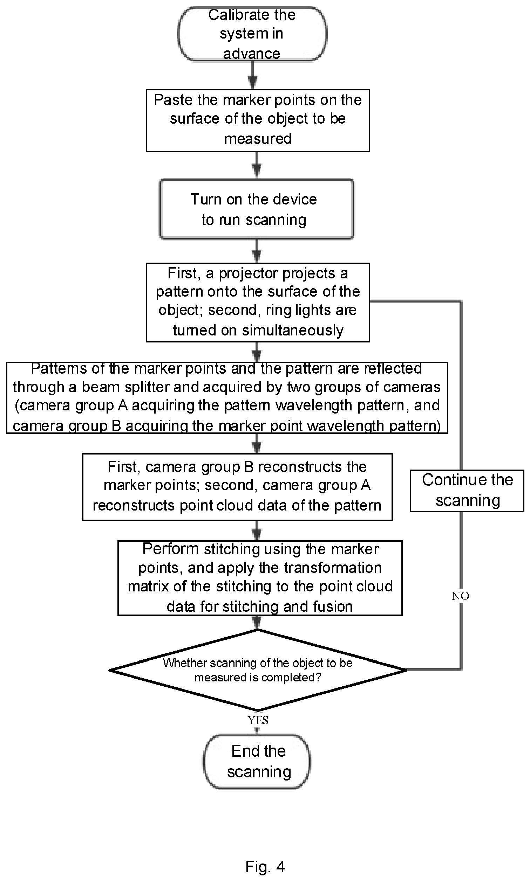

Fig. 4 is a schematic diagram of an image acquisition process according to some embodiments of the present invention. As shown in Fig. 4, the process includes the following steps.

At S41, the image acquisition device is calibrated in advance; for example, the system is calibrated in advance.

At S42, marker points are set on the surface of the object to be acquired; for example, the marker points are pasted on the surface of the object to be measured.

At S43, the image acquisition device is turned on for scanning, i.e., image acquisition; for example, the device is turned on to run scanning.

At S44, the first projector projects a projection pattern of a first wavelength onto the surface of the object to be acquired; and the illumination component projects light of a second wavelength onto the object to be acquired; for example, first, a projector projects a pattern onto the surface of the object; second, ring lights are turned on simultaneously.

At S45, the projection image and the marker point image are acquired by the first camera module and the second camera module respectively through the filtering component and the beam splitting component; for example, patterns of the marker points and the pattern are reflected through a beam splitter and acquired by two groups of cameras (camera group A acquiring the pattern wavelength pattern, and camera group B acquiring the marker point wavelength pattern).

At S46, three-dimensional reconstruction is performed based on the projection image acquired by the first camera module to obtain a three-dimensional point cloud; and three-dimensional reconstruction is performed based on the marker point image acquired by the second camera module to determine three-dimensional digital marker points; for example, first, camera group B reconstructs the marker points; second, camera group A reconstructs point cloud data of the pattern.

At S47, stitching is performed utilizing the three-dimensional digital marker points, and transformation matrix of the stitching is applied to the three-dimensional point cloud for stitching and fusion; for example, stitching is performed using the marker points, and the transformation matrix of the stitching is applied to the point cloud data for stitching and fusion.

Then, it is detected whether scanning of the object to be measured is completed. If not completed, the process returns to S44. If completed, the scanning ends, and S48 is executed.

At S48, in response to an instruction to end the scanning from a user, a signal indicating completion of scanning of the object to be acquired is acquired, and the scanner is controlled to end scanning.

Optionally, when data is acquired, the projector and the ring light (such as the illumination component) simultaneously project light onto the surface of the object to be acquired. The reflected light thereof undergoes dual-channel light selection through a filter plate, and then passes through a beam splitter. One path transmits light of the first wavelength based on the projector to the first camera module, and the other path transmits light of the second wavelength based on the ring light (such as the illumination component) to the second camera module. Subsequently, three-dimensional reconstruction of the point cloud and marker points is performed based on images acquired by the first camera module and the second camera module.

The technical solution provided by the present invention may solve the problem of marker point contamination while acquiring the projection pattern and the marker point image simultaneously, ensuring high precision of stitched scanning.

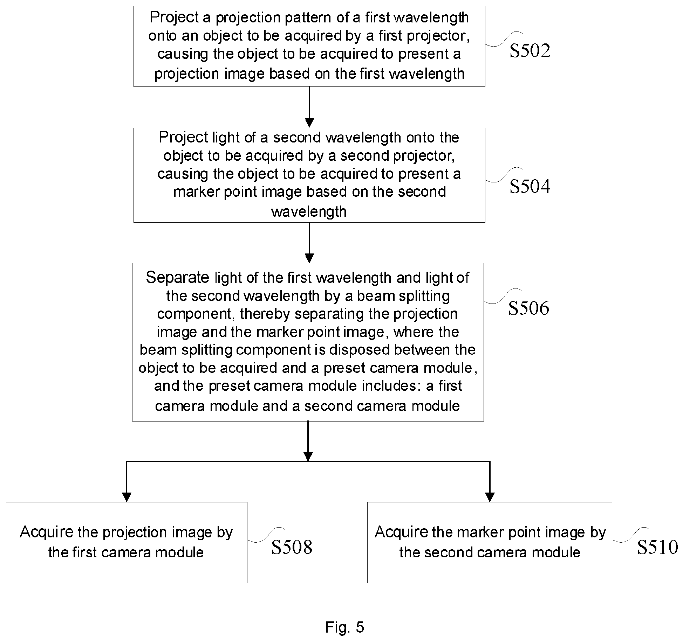

Fig. 5 is a flowchart of a method for image acquisition according to some embodiments of the present invention. As shown in Fig. 1, the method includes the following steps.

At S502, a projection pattern of a first wavelength is projected onto an object to be acquired by a first projector, causing the object to be acquired to present a projection image based on the first wavelength.

At S504, light of a second wavelength is projected onto the object to be acquired by a second projector, causing the object to be acquired to present a marker point image based on the second wavelength.

At S506, light of the first wavelength and light of the second wavelength are separated by a beam splitting component, thereby separating the projection image and the marker point image, where the beam splitting component is arranged between the object to be acquired and a preset camera module, and the preset camera module includes: a first camera module and a second camera module.

At S508, the projection image is acquired by the first camera module.

At S510, the marker point image is acquired by the second camera module.

In some embodiments of the present invention, a projection pattern of a first wavelength is projected onto an object to be acquired by a first projector, causing the object to be acquired to present a projection image based on the first wavelength; light of a second wavelength is projected onto the object to be acquired by a second projector, causing the object to be acquired to present a marker point image based on the second wavelength; then, light of the first wavelength and light of the second wavelength are separated by a beam splitting component arranged between the object to be acquired and a preset camera module, thereby separating the projection image and the marker point image, subsequently, the projection image is acquired by a first camera module, and the marker point image is acquired by a second camera module in the preset camera module. Thus, in the process of acquiring an image of the object to be acquired, the beam splitting component may separately propagate the projection image based on the first wavelength to the first camera module and propagate the marker point image based on the second wavelength to the second camera module, achieving the purpose of separating the projection image and the marker point image. This achieves the technical effect of avoiding contamination of marker points by the projection image in a case where the projection image and the marker point image are acquired simultaneously, thereby solving the technical problem in the related art that the marker point image is contaminated by the projection image in a case where the projection image and the marker point image are acquired simultaneously.

The above serial numbers of some embodiments of the present invention are merely for description and do not represent the superiority or inferiority of the embodiments.

In the above embodiments of the present invention, the description of each of the embodiments has its own focus. Parts not detailed in a certain embodiment may be referred to relevant descriptions in other embodiments.

The units described as separate components may or may not be physically separate. Components displayed as units may or may not be physical units, i.e., they may be located in one place or distributed across a plurality of units. Some or all of the units may be selected according to actual needs to achieve the purpose of the solution of this embodiment.

In addition, functional units in each of the embodiments of the present invention may be integrated into one processing unit, or each of the units may exist physically alone, or two or more than two units may be integrated into one unit. The above integrated units may be implemented in the form of hardware or in the form of software functional units.

If the integrated units are implemented in the form of software functional units and sold or used as independent products, they may be stored in a non-volatile storage medium. Based on such understanding, the technical solution of the present invention, essentially or the part contributing to the related art, or all or part of the technical solution, may be embodied in the form of a software product. The computer software product is stored in a non-volatile storage medium and includes several instructions for causing a computer device (which may be a personal computer, a server, or a network device, etc.) to execute all or part of the steps of the methods described in various embodiments of the present invention. The aforementioned non-volatile storage medium includes: USB flash drives, Read-Only Memory (ROM), Random Access Memory (RAM), mobile hard disks, magnetic disks, optical discs, and various other media capable of storing program code.

The above descriptions are only preferred implementations of the present invention. It should be pointed out that for those of ordinary skill in the art, several improvements and modifications may be made without departing from the principles of the present invention, and these improvements and modifications should also be regarded as the protection scope of the present invention.

### Industrial Applicability

The technical solution provided by the present invention may be applied to the field of three-dimensional image acquisition technology. The image acquisition device provided by the embodiments of the present invention may project a projection pattern of a first wavelength onto an object to be acquired by a first projector, causing the object to be acquired to present a projection image based on the first wavelength; project light of a second wavelength onto the object to be acquired by a second projector, causing the object to be acquired to present a marker point image based on the second wavelength; then separate light of the first wavelength and light of the second wavelength using a beam splitting component arranged between the object to be acquired and a preset camera module, thereby separating the projection image and the marker point image, and subsequently acquire the projection image by a first camera module and acquire the marker point image by a second camera module in the preset camera module. Thereby, in a case where acquiring the projection image and the marker point image simultaneously, the purpose of separating the projection image and the marker point image is achieved, realizing the technical effect of avoiding contamination of marker points by the projection image, and further solving the technical problem in the related art that the marker point image is contaminated by the projection image in a case where acquiring the projection image and the marker point image simultaneously.

## Claims

1. An image acquisition device, comprising:
a first projector, configured to project a projection pattern of a first wavelength onto an object to be acquired, causing the object to be acquired to present a projection image based on the first wavelength;
a second projector, configured to project light of a second wavelength onto the object to be acquired, causing the object to be acquired to present a marker point image based on the second wavelength;
a beam splitting component, arranged between the object to be acquired and a preset camera module, configured to separate light of the first wavelength and light of the second wavelength, thereby separating the projection image and the marker point image, wherein the preset camera module comprises: a first camera module and a second camera module;
the first camera module, configured to acquire the projection image; and
the second camera module, configured to acquire the marker point image.

2. The device according to claim 1, wherein
the first projector is a projector configured to project the projection pattern onto the object to be acquired using light of the first wavelength as a carrier.

3. The device according to claim 1, wherein the second projector comprises:
an illumination component, configured to project light of the second wavelength onto the object to be acquired, causing marker points on a surface of the object to be acquired to reflect the light of the second wavelength and present a marker point pattern based on the second wavelength; or
a projection component, configured to project the marker point pattern of the second wavelength onto the object to be acquired, causing the object to be acquired to present the marker point image based on the second wavelength.

4. The device according to claim 3, wherein the illumination component comprises:
a plurality of illumination modules, wherein the plurality of illumination modules are arranged around an image acquisition component, wherein the image acquisition component comprises at least: the second camera module.

5. The device according to claim 1, wherein the second projector comprises:
the beam splitting component is a beam splitter or a beam splitter group configured to respectively reflect and transmit light of different wavelengths in reflected light from the object to be acquired.

6. The device according to claim 1, wherein the device further comprises:
a filtering component, arranged between the object to be acquired and the beam splitting component, configured to filter out light of noise wavelengths from the object to be acquired,
obtaining the projection image based on the first wavelength and the marker point image based on the second wavelength.

7. The device according to claim 6, wherein the filtering component comprises:
a filter plate, arranged, between the preset camera module and the object to be acquired, configured to filter out light of wavelengths other than the first wavelength and the second wavelength, obtaining the projection image based on the first wavelength and the marker point image based on the second wavelength.

8. The device according to claim 7, wherein
the filter plate adopts dual channels, allowing both the light of the first wavelength and the light of the second wavelength to pass through simultaneously.

9. The device according to claim 7, wherein
the filter plate is perpendicular to optical axes of the first camera module and the second camera module.

10. The device according to claim 1, wherein
the first camera module, configured to be a camera group for three-dimensional reconstruction, and three-dimensional reconstruction of the object to be acquired is completed according to the projection image acquired by the first camera module.

11. The device according to claim 1, wherein
the second camera module, configured to be a camera group for three-dimensional stitching, three-dimensional reconstruction is performed according to the marker point image acquired by the second camera module to determine three-dimensional digital marker points, and a plurality of partial three-dimensional point clouds reconstructed in segments from the object to be acquired are stitched based on the three-dimensional digital marker points to obtain a complete three-dimensional point cloud model of the object to be acquired.

12. The device according to claim 1, wherein
the first camera module comprises: a first camera and a second camera, wherein the first camera and the second camera are arranged on two sides of an optical axis of the first projector, and distances from the first camera and the second camera to the first projector are identical; and
the second camera module comprises: a third camera and a fourth camera, wherein the third camera and the fourth camera are arranged on two sides of the optical axis of the first projector, and distances from the third camera and the fourth camera to the first projector are identical.

13. The device according to claim 1, wherein
the first camera in the first camera module and the third camera in the second camera module are arranged in a first acquisition part of the image acquisition device;
the second camera in the first camera module and the fourth camera in the second camera module are arranged in a second acquisition part of the image acquisition device;
wherein the first acquisition part and the second acquisition part are arranged on two sides of the optical axis of the first projector, and distances from the first acquisition part and the second acquisition part to the first projector are identical.

14. The device according to claim 13, wherein
the first projector, arranged on a perpendicular line of a midpoint of a line segment on which the first camera and the second camera lie, and on a perpendicular line of a midpoint of a line segment on which the third camera and the fourth camera lie.

15. The device according to claim 13, wherein the beam splitting component comprises:
a first beam splitting component, arranged between the object to be acquired and the first acquisition part; and
a second beam splitting component, arranged between the object to be acquired and the second acquisition part.

16. The device according to claim 1 or 15, wherein the beam splitting component comprises:
a first beam splitter, arranged between the object to be acquired and the first camera module, configured to transmit the projection image based on the first wavelength and reflect the marker point image based on the second wavelength; and
a first reflector, arranged between the object to be acquired and the second camera module, configured to reflect the marker point image reflected by the first beam splitter to the second camera module.

17. The device according to claim 16, wherein
the first beam splitter and the first reflector are parallel;
an angle between the first beam splitter and an optical axis of the first camera module is a preset angle; and
an angle between the first reflector and an optical axis of the second camera module is the preset angle;
wherein the preset angle is 45°.

18. The device according to claim 1 or 15, wherein the beam splitting component comprises:
a second beam splitter, arranged between the object to be acquired and the second camera module, configured to reflect the projection image based on the first wavelength and transmit the marker point image based on the second wavelength; and
a second reflector, arranged between the object to be acquired and the first camera module, configured to reflect the projection image reflected by the second beam splitter to the first camera module.

19. The device according to claim 18, wherein
the second beam splitter and the second reflector are parallel;
an angle between the second beam splitter and an optical axis of the first camera module is the preset angle; and
an angle between the second reflector and an optical axis of the second camera module is the preset angle;
wherein the preset angle is 45°.

20. A method for image acquisition, comprising:
projecting, by a first projector, a projection pattern of a first wavelength onto an object to be acquired, causing the object to be acquired to present a projection image based on the first wavelength;
projecting, by a second projector, light of a second wavelength onto the object to be acquired, causing the object to be acquired to present a marker point image based on the second wavelength;
separating, by a beam splitting component, light of the first wavelength and light of the second wavelength, thereby separating the projection image and the marker point image, wherein the beam splitting component is arranged between the object to be acquired and a preset camera module, and the preset camera module comprises: a first camera module and a second camera module;
acquiring, by the first camera module, the projection image; and
acquiring, by the second camera module, the marker point image.
